(19) Europäisches Patentamt
European Patent Office
Office européen des brevets

(11) Veröffentlichungsnummer: **0 221 853 B1**

(12) **EUROPÄISCHE PATENTSCHRIFT**

(45) Veröffentlichungstag der Patentschrift: **13.05.92**

(51) Int. Cl.[5]: **C09B 67/04**, C09B 67/10, C09B 47/06, C09B 25/00, C08K 9/04

(21) Anmeldenummer: **86810494.4**

(22) Anmeldetag: **31.10.86**

(54) **Verfahren zur Herstellung und Konditionierung organischer Pigmente.**

(30) Priorität: **06.11.85 CH 4761/85**

(43) Veröffentlichungstag der Anmeldung:
**13.05.87 Patentblatt 87/20**

(45) Bekanntmachung des Hinweises auf die Patenterteilung:
**13.05.92 Patentblatt 92/20**

(84) Benannte Vertragsstaaten:
**CH DE FR GB IT LI**

(56) Entgegenhaltungen:
**EP-A- 0 042 816**
**EP-A- 0 101 666**
**US-A- 3 634 016**

(73) Patentinhaber: **CIBA-GEIGY AG**
**Klybeckstrasse 141**
**CH-4002 Basel(CH)**

(72) Erfinder: **Bäbler, Fridolin, Dr.**
**Route du Couchant 12**
**CH-1723 Marly(CH)**

**EP 0 221 853 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein neues Verfahren zur Herstellung und Konditionierung organischer Pigmente.

Es ist bekannt, dass die organischen Pigmente zur Erzielung optimaler Pigmenteigenschaften in der Applikation, wie Dispergierbarkeit, Reinheit, Farbstärke bzw. Deckkraft, rheologische Eigenschaften, Licht- und Wetterbeständigkeiten, meistens bereits bei der oder anschliessend an die Synthese beispielsweise durch Nachbehandlung in einem organischen Lösungsmittel konditioniert werden müssen. Auf Grund ihrer Schwerlöslichkeit werden hierfür oft hochsiedende, ausgewählte Lösungsmittel, wie $\alpha$-Chlornaphtalin, Nitrobenzol, Gemische von Diphenyl und Diphenyläther, Chinolin, N-Methylpyrrolidon oder Dimethylformamid, eingesetzt. Derartige Lösungsmittel sind jedoch in Bezug auf ihre Wirtschaftlichkeit nicht besonders attraktiv und vor allem ökotoxikologisch nicht ohne Bedenken.

Es wurde nun gefunden, dass sich tricyclische Decan- und Decenalkohole dank ihrem hohen Siedepunkt, ihrer hohen Reinheit und ihrem im Temperaturbereich von 25 °C bis über 200 °C idealen Flüssigkeitsverhalten (z.B. Rheologie, Farblosigkeit) als Lösungsmittel für die Herstellung und die Konditionierung organischer Pigmente besonders gut eignen, ohne die obenaufgeführten Nachteile aufzuzeigen.

Gegenstand der vorliegenden Erfindung ist demnach ein Verfahren zur Herstellung und Konditionierung organischer Pigmente, dadurch gekennzeichnet, dass man mindestens einen Tricyclodecan- oder Tricyclodecenalkohol verwendet.

Beim Vorliegenden Verfahren bedeutet Konditionierung sowohl die Rekristallisation als auch die Mahlung organischer Pigmente.

Die erfindungsgemäss in Frage kommenden Tricyclodecanalkohole weisen bevorzugt die folgende Formel

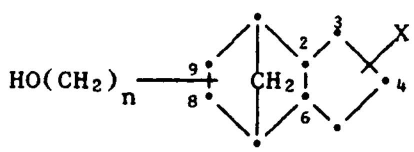

auf, worin n die Zahl 0 oder 1 ist und X ein Wasserstoffatom oder die Gruppe $-CH_2OH$ bedeutet.

Beispiele hierfür sind:

8(9)-Hydroxy-tricyclo[5.2.1.0.$^{2,6}$]decan, 8(9)-Hydroxymethyl-tricyclo[5.2.1.0.$^{2,6}$]decan,3(4), 8(9)-Bis-(hydroxymethyl)-tricyclo[5.2.1.0.$^{2,6}$]decan und 3(4)-Hydroxymethyl-tricyclo[5.2.1.0.$^{2,6}$]decan.

Besonders bevorzugt ist 3(4)-Hydroxymethyl-tricyclo[5.2.1.0.$^{2,6}$]decan.

Ein Beispiel für Tricyclodecenalkohol ist 8(9)-Hydroxy-tricyclo[5.2.1.0.$^{2,6}$]dec-3-en.

Organische Pigmente, die nach dem erfindungsgemässen Verfahren hergestellt unf konditioniert werden können, sind beispielsweise Pigmente der Diketopyrrolo-pyrrol-, Perylen-, Chinacridon-, Phthalocyanin-, Perinon-, Chinophthalon, Isoindolinon-, Isoindolin-, Dioxazin-, Anthrachinon-, Thioindigo-, Methin-, oder Azomethinreihe, sowie die Azopigmente und die Metallsalze davon. Bei den Pigmenten der Azomethin-, Methin- und Phthalocyaninreihe kommen sowohl die metallfreien als auch die Metallkomplexe davon in Betracht.

Das vorliegende Verfahren ist zur Herstellung und Konditionierung von Metallphthalocyaninen, wie Kupfer- oder Cobaltphthalocyanin, und zur Konditionierung von Azopigmenten, insbesondere C.I. Pigmentgelb 13 und C.I. Pigmentorange 34, besonders geeignet.

Ferner lassen sich auch Diketopyrrolo-pyrrol-, Perylen-, Chinacridon- und Isoindolinonpigmente erfindungsgemäss vorteilhaft konditionieren.

Bei der Herstellung und insbesondere Konditionierung mittels Rekristallisation organischer Pigmente können die erfindungsgemäss in Betracht gezogenen Tricyclodecan- und Tricyclodecenalkohole einzeln oder in Mischung, zweckmässig aber auch in Mischung mit anderen organischen Lösungsmitteln, wie Alkohole, Ketone, Ester, Aether, aliphatische oder aromatische Kohlenwasserstoffe, Pyridinbasen oder Amide, verwendet werden. In gewissen Fällen kann Wasser in einem Zweiphasengemisch mit dem Pigment, gegebenenfalls unter Druck, beigemischt werden. Die Menge des für die Herstellung und Rekristallisation verwendeten Tricycloalkohols richtet sich u.a. nach der Löslichkeit des herzustellenden oder zu rekristallisierenden Pigments im eingesetzten Tricycloalkohol und dem ausgewählten Verfahren zur Pigmentherstellung, wobei das Pigment im Tricycloalkohol vorteilhaft nicht vollständig gelöst sein sollte.

Vor allem polycyclische Pigmente, wie Anthrachinoid-, Perylen-, Perinon-, Chinacridon-, Dioxazin- und Metallkomplexpigmente, wie Metallphthalocyanine, lassen sich in den erfindungsgemäss in Betracht gezogenen Alkoholen vorteilhaft synthetisieren und insbesondere rekristallisieren. Dabei ist die Konzentration des Pigmentes in derartigen Tricycloalkoholen nicht kritisch und kann beispielsweise 3 bis 30 Gew. %, bevorzugt 5 bis 15 Gew. %, bezogen auf den eingesetzten Tricycloalkohol, betragen, wobei die Pigmentsuspension während der Synthese oder der Rekristallisation rührbar sein soll. Die in Frage kommenden Syntheseverfahren sind dem Fachmann wohl bekannt.

Gewisse polymorphe Pigmente können bei ihrer Synthese oder ihrer Rekristallisation in Tricyclodecan- und -decenalkoholen einen Kristallmodifikationswechsel erleiden.

Bevorzugt werden die feinstkristallinen Pigmente oder die Pigmente in praktisch amorphem Zustand, welche beispielweise durch Trockenoder Nassmahlung erzielt werden, durch thermische Nachbehandlung in Tricyclodecan- und -decenalkoholen zu einer koloristisch wertvolleren Form rekristallisiert.

Dabei können sowohl transparente als auch opake Pigmentformen mit ausgezeichneten Pigmenteigenschaften, wie Dispergierbarkeit, Reinheit, Transparenz bzw. Deckkraft, Migrations-, Licht-, und Wetterbeständigkeiten, erzielt werden.

Mit gewissen Pigmentklassen, wie Chinacridonen, ist es ferner möglich, aus geeigneten Pigmentmischungen mit feinstteiliger Partikelform durch thermische Nachbehandlung in den erfindungsgemäss in Betracht gezogenen Alkoholen, Mischkristalle zu erzeugen.

Nach der Synthese bzw. der Rekristallisation wird der hierfür verwendete Tricyclodecan- oder -decenalkohol nach an und für sich bekannten Methoden, vorteilhaft aber durch Einleiten von Wasserdampf in das Reaktions- bzw. Rekristallisationsgemisch, ausgetrieben und das Pigment durch Abfiltrieren der so gewonnenen Pigmentsuspension und anschliessende Trocknung isoliert.

Ferner können die erfindungsgemäss in Frage kommenden Tricyclodecan- und -decenalkohole auch als Mahlhilfsmittel in kleinen Mengen bei der Mahlung organischer Pigmente, beispielsweise bei der Trockenmahlung mit oder ohne Salz, insbesondere aber bei der wässrigen Mahlung, verwendet werden. Dabei können die Tricycloalkohole in Mengen von insbesondere 0,15 bis 25, bevorzugt 0,5 bis 10 Gew.-%, bezogen auf das zu mahlende Pigment, eingesetzt werden.

Bei der wässrigen Mahlung werden die Tricycloalkohole vorteilhaft in einer solchen Menge eingesetzt, dass sie in der Pigmentsuspension nicht gelöst sind. Neben reinen organischen Pigmenten ist es möglich, Pigmentmischungen einzusetzen. Dabei können Pigmentlegierungen, beispielsweise wie in der EP-Patentschrift Nr. 0042816 beschrieben, oder in geeigneten Fällen feste Lösungen von Pigmenten ("pigment solide solutions") hergestellt werden.

Als Mahlapparatur kann jede Vorrichtung verwendet werden, die es erlaubt, das Pigment und, gegebenenfalls einen Zusatz bzw. Zusätze, wie beispielsweise einen Trägerstoff, im trockenen Zustand oder in einem flüssigen Medium intensiven mechanischen Kraftwirkungen zu unterwerfen. Derartige Apparaturen sind in grösserer Zahl bekannt. Sie beruhen beispielsweise auf dem Prinzip eines in flössigem Medium erzeugten grossen Geschwindigkeitsgradienten oder einer plötzlichen Richtungsänderung, oder insbesondere auf Aufprallwirkung oder gegenseitiger Reibung von Mahlkörpern, wie Metall-, Glas- oder Porzellankugeln, Kunstoffgranulaten oder Sandkörnern, die durch Rotation des Gefässes oder noch wirksamer surch Schwingungserzeuger oder rührartige Vorrichtungen, wie beispielsweise bei den Glasperlmühlen, in Bewegung gesetzt werden.

Die Mahltemperatur ist innerhalb technisch vernünftiger Grenzen nicht kritisch. Zweckmässig wird man die Mahlung bei Temperaturen zwischen 5 und 90 ° C, vorzugsweise bei 15 bis 60 ° C, durchführen.

Wenn auch in der Regel die zu mahlende Pigmentsuspension bei Nassmahlung neutral ist, so kann es in gewissen Fällen von Vorteil sein, den pH-Wert der Pigmentsuspension in den sauren oder alkalischen Bereich zu verschieben.

Zur Mahlung können neben den erfindungsgemäss zu verwendenden Tricyclodecan- und -decenalkoholen weitere Zusätze eingesetzt werden, die die applikatorischen Eigenschaften der gemahlenen Pigmente günstig beeinflussen, wie Beispielsweise Texturschutzmittel. Solche Zusätze kann man in Mengen von 0,05 bis 20, bevorzugt 1 bis 10 Gew.-%, bezogen auf das zu mahlende Pigment oder Pigmentgemisch, zugeben.

Geeignete Texturschutzmittel sind beispielsweise Fettsäuren mit mindestens 12 C-Atomen, wie Stearinsäure oder Behensäure, deren Amide, Salze oder Ester, wie Magnesiumstearat, Zinkstearat, Aluminiumstearat oder Magnesiumbehenat, ferner quartäre Ammoniumverbindungen, wie Tri-($C_1$-$C_4$)-alkylbenzylammoniumsalze, ferner Weichmacher, wie epoxidiertes Sojabohnenöl, Wachse, wie Polyäthylenwachs, Harzsäuren, wie Abietinsäure, Kolophoniumseife, hydriertes oder dimerisiertes Kolophonium, $C_{12}$-$C_{18}$-Paraffindisulfonsäuren, Alkylphenole oder Alkahole, wie Stearylalkohol, ferner Lauryl- oder Stearylamin, sowie aliphatische 1,2-Diole.

Bevorzugte Texturschutzmittel sind Lauryl- oder Stearylamin, aliphatische 1,2-Diole, Stearinsäure, deren Amide, Salze oder Ester, epoxidiertes Sojabohnenöl, Wachse oder Harzsäuren.

In der Regel wird das erfindungsgemässe Mahlverfahren in Abwesenheit von weiteren organischen Lösungsmitteln durchgeführt. Geringe Mengen davon können jedoch geduldet werden, soweit sie das Verfahren nicht beeinträchtigen.

Im erfindungsgemässen Nassmahlverfahren kann man Pigment, Tricyclodecan- oder -decenalkohol, Wasser und eventuelle Zusätze gleichzeitig oder nacheinander der Mahlapparatur zuführen. Man mahlt solange, bis das Pigment in der gewünschten transparenten, farbstarken Form vorliegt. In der Regel dauert dies je nach Mahlapparatur, Mahlansatz, Umlaufgeschwindigkeit, Pigment und Zusätzen $\frac{1}{4}$ bis 72 Stunden. Die benötigte Mahldauer ist von Fall zu Fall leicht zu ermitteln.

Die Aufarbeitung kann auf bekannte Art durch Abfiltrieren der Pigmentsuspension, Entfernen der nicht im Pigment verbliebenen Zusätze und Trocknen erfolgen. Der oben erwähnte Tricycloalkohol kann durch Auswaschen des Kilterkuchens mit einem organischen Lösungsmittel, wie Methanol, wieder entfernt werden. Wenn auch nicht notwendig, so kann es je nach Pigment und dessen Verwendungszweck von Vorteil sein, den verwendeten Tricycloalkohol im Pigment oder Pigmentgemisch zu belassen.

In einzelnen Fällen ist es von Vorteil, das Pigment so lange zu mahlen bis es in feinstkristallinem bis amorphem Zustand vorliegt. Das so erhaltene Pigment kann dann durch Zugabe von organischen Lösungsmitteln, wie Ester, Alkohole, Ketone, Aetherglykole oder Kohlenwasserstoffe, zur erhaltenen Mahlsuspension und durch Erwärmen, gegebenenfalls unter Druck, in eine gleichmässige fein bis grob kristalline Partikelform mit ausgezeichneten Pigmenteigenschaften übergeführt werden. Das bzw. die organische(n) Lösungsmittel können mit Vorteil vor der Filtrierung der Pigmentsuspension durch Einleiten von Wasserdampf entfernt werden.

Nach dem erfindungsgemässen Mahlverfahren ist es möglich, reine, farbstarke Pigmente mit ausgezeichneten applikatorischen Eigenschaften, wie Rheologie und Dispergierbarkeit, herzustellen.

Verbleibt der Tricyclodecan- oder -decenalkohol oder ein Teil der eingesetzten Menge nach der Synthese, der Rekristallisation oder dem Mahlen im Pigment oder Pigmentgemisch, so beobachtet man eine ausgezeichnete Verträglichkeit des Tricycloalkohols mit dem zu färbenden Substrat, dies unabhängig von der eingesetzten Alkohol-Menge. Auch werden die Pigmenteigenschaften im eingefärbten Substrat, wie z.B. die Hitze-, Wetter-, Licht- und Migrationsbeständigkeit, nicht beeinträchtigt.

Hochmolekulare organische Materialien, die mit den erfindungsgemäss erhaltenen Pigmenten gefärbt bzw. pigmentiert werden können, sind z.B. Celluloseäther und -ester, wie Aethylcellulose, Nitrocellulose, Celluloseacetat, Cellulosebutyrat, natürliche Harze oder Kunstharze, wie Polymerisationsharze oder kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, Gummi, Casein, Silikon und Silikonharze, einzeln oder in Mischungen.

Die erwähnten hochmolekularen organischen Verbindungen können einzeln oder in Gemischen als plastische Massen. Schmelzen oder in Form von Spinnlösungen, Lacken, Anstrichstoffen oder Druckfarben vorliegen. Je nach Verwendungszweck erweist es sich als vorteilhaft, die erfindungsgemäss zu verwenden Pigmente als Toner oder in Form von Präparaten einzusetzen.

Bezogen auf das zu pigmentierende hochmolekulare organische Material setzt man die erfindungsgemäss erhaltenen Pigmente in einer Menge von 0,01 bis 30 Gew.%, vorzugsweise 0,1 bis 10 Gew.%, ein.

Die Pigmentierung der hochmolekularen organischen Substanzen mit den erfindungsgemäss erhaltenen Pigmenten erfolgt beispielsweise derart, dass man ein solches Pigment gegebenenfalls in Form von Masterbatches diesen Substraten unter Verwendung von Walzwerken, Mischoder Mahlapparaten zumischt. Das pigmentierte Material wird hierauf nach an sich bekannten Verfahren, wie Kalandrieren, Pressen, Strangpressen, Streichen, Giessen oder Spritzguss in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverlieben. Als solche können z.B. Ester der Phosphorsäure, Phthalsäure oder Sebacinsäure dienen. Die Weichmacher können im erfindungsgemässen Verfahren vor oder nach der Einverleibung des Pigmentfarbstoffes in die Polymeren eingearbeitet werden. Es ist ferner möglich, zwecks Erzielung verschiedener Farbtöne den hochmolekularen, organischen Stoffen neben den erfindungsgemäss erhaltenen Pigmenten noch Füllstoffe bzw. andere farbgebende Bestandteile, wie Weiss-, Bunt- oder Schwarzpigmente, in beliebigen Mengen zuzufügen.

Zum Pigmentieren von Lacken und Druckfarben werden die hochmolekularen organischen Materialien und die erfindungsgemäss erhaltenen Pigmente gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die erhaltenen Färbungen, beispielsweise in Kunststoffen, Fasern, Lacken oder Drucken, zeichnen sich durch gute allgemeine Eigenschaften, wie gute Dispergierbarkeit, hohe Farbstärke, gute Ueberlackier-, Migrations-, Hitze-, Licht- und Wetterbeständigkeit, sowie durch einen guten Glanz aus.

In den nachfolgenden Beispielen bedeuten die Prozente Gewichtsprozente.

Beispiel 1: In einer 500 ml fassenden Glasperlmühle mit einem Durchmesser von 8 cm werden 13,0 g 1,4-Diketo-3,6-diphenyl-pyrrolo-[3,4-c]-pyrrol (hergestellt gemäss Beispiel 1 der EP-Patentanmeldung Nr. 94 911), 0,7 g 8-Hydroxymethyl-tricyclo[5.2.1.$0^{2,6}$]decan [Handelsname: TCD-Alkohol M® der Firma HOECHST, DE], 125 g Wasser und 400 g Glaskugeln mit einem Durchmesser von 3,5 - 4,0 mm während 8 Stunden bei 320 U/Min. unter Wasserkühlung verrührt. Die Umlaufgeschwindigkeit des verwendeten Metallflügelrührers mit einem Durchmesser von 5,5 cm beträgt 0,92 m/sec. Die Pigmentsuspension wird von den Glaskugeln abgetrennt, welche mit Wasser nachgewaschen werden, dann abfiltriert. Man trocknet den Presskuchen bei 70 - 80°C im Vakuumtrockenschrank und erhält 13,1 g rotes Diketopyrrolopyrrol-Pigment gleicher obiger Struktur, welches nach dem Pulverisieren in einwandfreier Dispergierung farbstarke Färbungen beim Einarbeiten in Kunststoffe und Lacke ergibt.

Beispiel 2: Verfährt man analog wie in Beispiel 1 beschrieben, verwendet aber 1,4-Diketo-3,6-bis(4-chlorphenyl)-pyrrolo-[3,4-c]-pyrrol als Pigment (hergestellt gemäss Beispiel 6 der EP-Patentanmeldung Nr. 94911), so erhält man ein rotes Pigment mit analog guten Pigmenteigenschaften.

Beispiel 3: Verfährt man analog wie in Beispiel 2 beschrieben, verwendet aber anstelle von 0,7 g 8-Hydroxymethyl-tricyclo[5.2.1.0-$^{2,6}$]decan [TCD-Alkohol M® der Firma HOECHST] 0,7 g 3(4),8(9)-Bis-(hydroxymethyl)-tricyclo[5.2.1.$0^{2,6}$]decan [TCD-Alkohol DM®, HOECHST], so erhält man ein Pigment mit analog guten Eigenschaften.

Beispiel 4: 8,1 g grobkristallines, nadelförmiges Perylentetracarbonsäuredianhydrid und 0,9 g 8-Hydroxymethyl-tricyclo[5.2.1.$0^{2,6}$]decan [TCD-Alkohol M®, HOECHST] werden zusammen in einem 250 ml fassenden Becherglas mit einem Durchmesser von 6 cm in 40 g Wasser mit 90 ml Sand (Ottawa Sand mit einem Durchmesser von 2 - 3 mm) und einem Nylon-Scheibenrührer mit einem Durchmesser von 4,5 cm bei einer Rührgeschwindigkeit von 2000 U/Min. ohne Aussenkühlung während 3 Stunden gemahlen. Die Umlaufgeschwindigkeit des Nylon-Scheibenrührers beträgt ca. 4,7 m/sec. Die gemahlene Pigmentsuspension wird vom Sand abgetrennt, welcher mit Wasser nachgewaschen wird, dann abfiltriert. Man trocknet den Presskuchen bei 70 - 80°C im Vakuumtrockenschrank und pulverisiert das Trockengut. Man erhält 8 g rotes Perylentetracarbonsäuredianhydrid-Pigment, welches, eingearbeitet in Weich-PVC-Walzfolien, farbstarke Färbungen ergibt.

Beispiel 5: Verfährt man analog wie in Beispiel 1 beschrieben, verwendet aber anstelle des Diketopyrrolopyrrolpigmentes die Rohform des anthrachinoiden Indanthronblau, so erhält man ein Indanthronblau-Pigment, welches, eingearbeitet in Alkydmelamin-Einbrennlacke, Färbungen hoher Farbstärke und ausgezeichneter Wetterbeständigkeit ergibt.

Beispiel 6: In einer 500 ml fassenden Glaspermühle mit einem Durchmesser von 8 cm werden 14,8 g rohes β-Cu-Phthalocyanin, 0,2 g 8-Hydroxymethyl-tricyclo[5.2.1.$0^{2,6}$]decan [TCD-Alkohol M®, HOECHST], 125 g Wasser und 400 g Glaskugeln mit einem Durchmesser von 3,5 - 4,0 mm während 15 Stunden bei 320 U/Min. unter Wasserkühlung verrührt. Die Umlaufgeschwindigkeit des dazu verwendeten Metallflügelrührers von 5,5 cm Durchmesser beträgt 0,92 m/sec. Die Pigmentsuspension wird von den Glaskugeln abgetrennt, welche mit Wasser gewaschen werden, dann abfiltriert. Man trocknet den Presskuchen bei 70 - 80°C im Vakuumtrockenschrank und erhält 13,5 g blaues Cu-Phthalocyanin-Pigment, welches, nach dem Pulverisieren in Lacken appliziert, farbstarke Färbungen ergibt.

Beispiel 7: Verwendet man anstelle von β-Cu-Phthalocyanin das direkt aus der Synthese anfallende Dioxazinpigment C.I. Pigment Violett 37, mahlt anstelle von 15 Stunden 14 Stunden und verfährt sonst auf analoge Art wie in Beispiel 6 beschrieben, so erhält man ein sehr reines, violettes Dioxazin-Pigment gleicher Struktur, welches sich mit ausgezeichneten Pigmenteigenschaften in Kunststoffe, Lacke und Drucktinten einarbeiten lässt.

Beispiel 8: Verwendet man anstelle von β-Cu-Phthalocyanin 14,2 g des direkt aus der Synthese anfallenden Azopigments C.I. Pigment Rot 166 und 0,8 g 8-Hydroxymethyl-tricyclo[5.2.1.$0^{2,6}$]decan [TCD-Alkohol M®, HOECHST] und mahlt anstelle von 15 Stunden 4 Stunden, verfährt sonst auf analoge Art wie in Beispiel 6 beschrieben, so erhält man ein farbstarkes Azopigment gleicher Struktur, welches sich ausgezeichnet in Kunststoffe und Lacke einarbeiten lässt.

Beispiel 9: 160 g rohes Isoindolinonpigment C.I. Pigment Gelb 110, 8 g 8-Hydroxymethyl-tricyclo-[5.2.1.0$^{2,6}$]decan [TCD-Alkohol m®, HOECHST] und 1520 g Wasser werden in einem Becherglas während 30 Minuten verrührt. In einer DYNO-Mühle, Typ KDL der Firma Willy A. Bachofen, Basel, versehen mit einem 600 ml fassenden Stahlmahlbehälter, gefüllt mit 480 - 510 ml Glaskugeln mit einem Durchmesser von ca. 1 mm, wird die Pigmentsuspension bei einer Rührgeschwindigkeit von 3000 U/Min. und einer Pumpenfördermenge von 400 ml/Min. intensiv bei 20 - 25 °C während 3 Stunden gemahlen. Die Umlaufgeschwindigkeit des Kunststoffscheibenrührers beträgt 10,2 m/sec. 1500 g der so erhaltenen Pigmentsuspension, welche das Isoindolinonpigment in feinstkristalliner Partikelform enthält, werden mit 240 ml tert.-Amylalkohol versetzt, das erhaltene Gemisch wird auf 85 °C erwärmt und bei 85 °C während 2½ Stunden gerührt. Dann wird tert.-Amylalkohol durch Einleiten von Wasserdampf abdestilliert. Die Pigmentsuspension enthaltend ein rekristallisiertes Isoindolinonpigment wird abfiltriert, der Presskuchen mit Wasser gewaschen und im Vakuumtrockenschrank bei 80 °C getrocknet und pulverisiert. Man erhält ein gelbes Isoindolinon-Pigment gleicher Struktur, welches aufgrund von elektronnenmikroskopischen Aufnahmen eine einheitliche Partikelform mit einer durchschnittlichen Teilchengrösse von weniger als 0.2 µm aufweist. Trotz dieser Partikelfeinheit weist es beim Einarbeiten in Lacke gute rheologische Eigenschaften auf, ist einwandfrei dispergierbar und ergibt farbstarke Färbungen.

Beispiel 10: 42,5 g rohes Chinacridonpigment der γ-Form, 0,7 g Staybelite Resin, 6,8 g anthrachinoides Pigment C.I. Pigment Rot 177, 3,2 g 8-Hydroxymethyl-tricyclo[5.2.1.0$^{2,6}$]decan [TCD-Alkohol M®, HOECHST] und 570 ml Wasser werden in einem Becherglas während 30 Minuten gut verrührt. In einer DYNO-Mühle, Typ KDL der Firma Willy A. Bachofen, Basel, versehen mit einem 600 ml fassenden Stahlmahlbehälter, gefüllt mit 480 - 510 ml Glaskugeln mit einem Durchmesser von ca. 1 mm, wird die Pigmentsuspension bei einer Rührgeschwindigkeit von 3000 U/Min. und einer Pumpenfördermenge von 400 ml/Min. intensiv bei 20 - 25 °C während 3 Stunden und 15 Minuten gemahlen. Die Umlaufgeschwindigkeit des kunstoffscheibenrührers beträgt 10,2 m/sec. Die Pigmentsuspension wird von den Glaskugeln getrennt, welche mit 500 ml Wasser gewaschen werden. Man filtriert ab, wäscht den presskuchen mit Wasser, trocknet ihn im Vakuumtrokkenschrank bei 80 °C und pulverisiert das Pigment. Man erhält eine Pigmentmischung aus den oben aufgeführten Pigmenten, welche, appliziert in Lacken und Kunststoffen, sehr farbstarke blaustichigrote Färbungen mit ausgezeichneten Beständigkeiten ergibt.

Beispiel 11: Verfährt man analog wie in Beispiel 10 beschrieben, verwendet aber anstelle von 42,5 g Chinacridonpigment diesselbe Menge Perylentetracarbonsäure-N,N'-dimethylimidpigment und 7,5 g Perylentetracarbonsäuredianhydridpigment anstelle von C.I. Pigment Rot 177, so erhält man eine Pigmentmischung der oben angegebenen chemischen Strukturen, welche, appliziert in Lacken und Kunststoffen, sehr farbstarke rote Färbungen mit ausgezeichneten Beständigkeiten ergibt.

Beispiel 12: Verfährt man analog wie in Beispiel 4, verwendet aber anstelle von Perylentetracarbonsäuredianhydrid das orangefarbige Isoindolinpigment der Formel

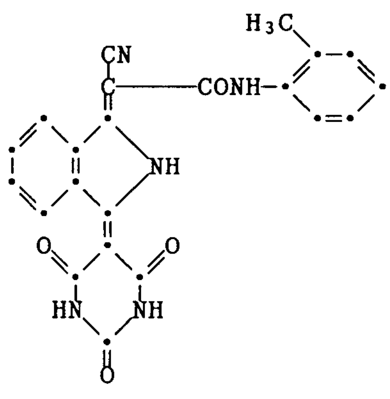

(hergestellt nach Beispiel 51 der deutschen Patentschrift Nr. 2 814 526) und anstelle von TCD-Alkohol M® das 3(4),8(9)-Bis(hydroxymethyl)-tricyclo[5.2.1.0$^{2,6}$]decan [TCD-Alkohol DM®, HOECHST], so erhält man ein farbstarkes Isoindolin-Pigment gleicher Struktur, welches sich einwandfrei in Lacken und Kunststoffen und mit guten allgemeinen Pigmenteigenschaften applizieren lässt.

Beispiel 13: Verwendet man anstelle von TCD-Alkohol DM® das 8-Hydroxymethyl-tricyclo[5.2.1.0$^{2,6}$]-decan [TCD-Alkohol A®, HOECHST], verfährt sonst analog wie in Beispiel 12 beschrieben, so erhält man ein Pigment mit analog guten Eigenschaften.

Beispiel 14: Verwendet man anstelle von Perylentetracarbonsäuredianhydrid diesselbe Menge an Tetrachlorthioindigopigment, so erhält man ein bei sonst gleicher Arbeitsweise wie in Beispiel 4) beschrieben farbstarkes bordeauxfarbiges Tetrachlorthioindigo-Pigment mit guten allgemeinen Beständigkeiten.

Beispiel 15: In einer Stahlkugelmühle werden 135 g $Al_2(SO_4)_3 \bullet 16\ H_2O$, 15 g rohes $\beta$-Chinacridonpigment, 1,5 ml 8-Hydroxymethyl-tricyclo[5.2.1.$0^{2,6}$]decan (TCD Alkohol M®, HOECHST) während 72 Stunden gemahlen. Das Mahlpulver wird von den Stahlkugeln getrennt, dann in 500 ml Wasser enthaltend 3 ml conc. Schwefelsäure während zwei Stunden bei 80 ° C verrührt. Das erhaltene Pigment wird abfiltriert, mit Wasser salz- und säurefrei gewaschen, bei 80 ° im Vakuumtrockenschrank getrocknet und gepulvert. Man erhält ein $\beta$-Chinacridonpigment mit einer durchschnittlichen Teilchengrösse von weniger als 0,1 $\mu$m, welches, appliziert in Lacken, ausgezeichnete Pigmenteigenschaften aufweist.

Beispiel 16: Verfährt man analog wie in Beispiel 4 beschrieben, verwendet aber anstelle von 0,9 g 8-Hydroxymethyl-tricyclo[5.2.1.$0^{2,6}$]decan 8(9)-Hydroxy-tricyclo[5.2.1.$0^{2,6}$]dec-3-en [TCD-Alkohol E®, HOECHST], so erhält man ein rotes Pigment mit analog guten Eigenschaften.

Beispiel 17: In einer 1500 ml fassender Glasapparatur, ausgerüstet mit Kühler, Thermometer, Gaseinleitungsrohr und Halbankerrührer, werden 148 g Phthalsäureanhydrid, 240 g Harnstoff und 33,8 g Kobalt-(II)-Chlorid (wasserfrei) in 400 ml 8-Hydroxymethyl-tricyclo[5.2.1.$0^{2,6}$]decan [TCD-Alkohol M®, HOECHST] innert einer Stunde unter Stickstoff auf 130 ° C, dann innert einer Stunde auf 150 ° C und wieder innert einer Stunde auf 170 ° C erwärmt. Dann wird die erhaltene Suspension während 12 Stunden bei 170 ° C weitergerührt. Man kühlt das Reaktionsgemsich auf 80 ° C und filtriert die Pigmentsuspension ab. Der Presskuchen wird mit Azeton, dann mit verdünnter wässeriger Natronlauge gewaschen und in verdünnter Salzsäure angeschlämmt. Die erhaltene Suspension wird verrührt, abfiltriert, und der Presskuchen wird mit Wasser neutral und salzfrei gewaschen, im Vakuumtrockenschrank bei 80 ° C getrocknet und gepulvert. Man erhält 30,5 g Kobaltphthalocyanin.

Mikroanalyse:

berechnet: 67,26 % C; 2,82 % H; 19,61 % N; 10,31 % Co

gefunden: 67,0 % C; 2,4 % H; 19,6 % N; 9,91 % Co.

Nach ähnlichem Verfahren lassen sich mit den entsprechenden Metallsalzen auch andere Metallphthalocyaninpigmente wie Cu- oder Ni-Phthalocyanin herstellen.

Beispiel 18: In einer 350 ml fassenden Glasapparatur, ausgerüstet mit Kühler, Thermometer, Gaseinleitungsrohr und Halbankerrührer, werden 4,3 g Chinaldin und 8,6 g Tetrachlorphthalsäureanhydrid in 100 ml 8-Hydroxylmethyl-tricyclo[5.2.1.$0^{2,6}$]decan [TCD-Alkohol M®, HOECHST] verrührt und unter Stickstoff auf 190 ° C erwärmt. Man rührt bei 190 ° C während 4 Stunden, kühlt die entstandene gelbe Suspension auf 40 ° C, verdünnt mit 150 ml Methanol, filtriert ab, wäscht den Presskuchen mit Methanol bis farblos und trocknet das gelbe Pigment im Vakuumtrockenschrank bei 80 ° C. Man erhält 3,9 g gelbes Chinophthalonpigment der Formel

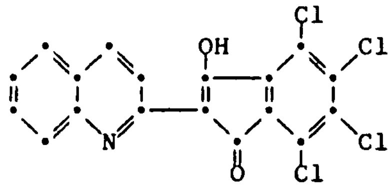

,

welches als Pulver in Druckfarben und Lacke eingearbeitet, farbstarke gelbe Färbungen mit guten Beständigkeiten ergibt.

Mikroanalyse:

berechnet: 52,59 % C; 1,72 % H; 3,41 % N; 34,50 % Cl

gefunden: 52,60 % C; 1,75 % H; 3,40 % N; 34,24 % Cl

Beispiel 19: 5 g des nach dem Beispiel 6 der US-Patentschrift Nr. 4 579 949 hergestellten Diketopyrrolopyrrolpigmentes und 60 ml 8-Hydroxymethyltricyclo[5.2.1.$0^{2,6}$]decan [TCD-Alkohol M®, HOECHST] werden während 2 1/2 Stunden bei 220 ° C verrührt. Die Pigmentsuspension wird auf 40 ° C abgekühlt, mit 100 ml Methanol verdünnt und abfiltriert, der presskuchen wird mit Methanol gewaschen, bei 80 ° C im Vakuumtrockenschrank getrocknet und gepulvert. Das so erhaltene Diketropyrrolopyrrolpigment obiger Struktur weist gegenüber der Ausgangsform beim Applizieren in Lacken und Kunststoffen eine wesentlich opakere rote Nuance mit verbesserten Licht- uns Wetterbeständigkeiten auf.

Beispiel 20: 5 g Isoindolinpigment (C.I. Pigment Gelb 110, als $\alpha$-Kristallmodifikation), 40 g Hexandiol-1,2 und 20 g 8-Hydroxymethyltricyclo[5.2.1.0$^{2,6}$]decan (TCD-Alkohol M®, HOECHST] werden während 4 Stunden bei 220 - 230°C verrührt. Die Pigmentsuspension wird abgekühlt, mit 100 ml Methanol verdünnt und abfiltriert. Der Presskuchen wird mit Methanol gewaschen, im Vakuumtrockenschrank getrocknet und gepulvert. Man erhält ein opakes C.I. Pigment Gelb 110, welches als $\beta$-Kristallmodifikation vorliegt und der in der japanischen Offenlegungsschrift Nr. 51-088516 beschriebenen $\beta$-Modifikation entspricht.

Beispiel 21: 5 g feinteiliges handelsübliches Azopigment C.I. Pigment Gelb 13, 80 ml 8-Hydroxymethyltricyclo [5.2.1.0$^{2,6}$]decan [TCD-Alkohol M®, HOECHST] werden während 30 Minuten bei 180°C verrührt. Die Pigmentsuspension wird auf 40°C abgekühlt, mit 100 ml Methanol verdünnt und abfiltriert, der Presskuchen wird mit Methanol gewaschen, bei 80°C im Vakuumtrockenschrank getrocknet und gepulvert. Das so erhaltene Azopigment obiger Struktur weist gegenüber der Ausgangsform beim Applizieren in Lacken und Kunststoffen eine wesentlich opakere Nuance mit verbesserten licht-, Wetter- und Migrationsbeständigkeiten auf.

Verfährt man analog wie oben beschrieben, verwendet aber anstelle von C.I. Pigment Gelb 13 ein feinteiliges handelsübliches C.I. Pigment Orange 34 und rührt anstelle von 30 Minuten 1 Stunde bei 180°C, so erhält man ein orangefarbiges Pigment obiger Konstitution, welches gegenüber der Ausgangsform beim Applizieren in Kunststoffen und Lacken eine wesentlich opakere Nuance mit verbesserten Licht-, Wetter- und Migrationsbeständigkeiten aufweist.

Beispiel 22: Eine Mischung von 130 g Steatitkugeln von 8 mm Durchmesser, 47,5 g Alkydmelamineinbrennlack, bestehend aus 60 g Beckosol® 27-320 (Reichhold Chemie AG) 60 %-ig in Xylol, 36 g Super-Beckamin® 13-501 (Reichhold Chemie AG) 50 %-ig in Xylol:Butanol (2:1-Gemisch), 2 g Xylol und 2 g Aethylenglykolmonomethyläther, und 2,5 g der nach Beispiel 10 erhaltenen Pigmentmischung werden in einer 200 ml fassenden Glasflasche mit Twist-off-Verschluss während 120 Stunden auf einem Rollgestell dispergiert. Nach Abtrennen der Steatitkugeln werden 2,4 g der so dispergierten Volltonmischung mit 60 g Titandioxid Kronos® RN 59 (Kronos Titan GmbH) und weiteren 24,0 g des obigen Alkydmelamineinbrennlacks vermischt, auf Aluminiumbleche gespritzt und anschliessend während 30 Minuten bei 130°C eingebrannt. Man erhält blaustichige rote Färbungen mit ausgezeichneten Beständigkeiten.

Beispiel 23: Eine Mischung von 1,0 g des nach Beispiel 9 erhaltenen Isoindolinonpigments, 1,0 g Antioxydant IRGANOX® 1010 der Ciba-Geigy AG und 1000 g Polyäthylen-HD Granulat Vestolen® A 60-16 der Firma HüLs wird während 15 Minuten in einer Glasflasche auf einer Rollbank vorgemischt. Danach wird die Mischung in zwei Passagen auf einem Einwellenextruder extrudiert, das so erhaltene Granulat auf der Spritzgussmaschine (Allround Aarburg 200) bei 220°C zu Platten verspritzt und 5 Minuten bei 180°C nachgepresst. Die Pressplatten weisen farbstarke gelbe Nuancan mit ausgezeichneten Beständigkeiten auf.

Beispiel 24: 0,6 g des gemäss Beispiel 1 erhaltenen Pigmentes werden mit 67 g Polyvinylchlorid, 33 g Dioctylphthalat, 2 g Dibutylzinndilaurat und 2 g Titandioxid zusammengemischt und auf dem Walzenstuhl während 15 Minuten bei 160°C zu einer dünnen Folie verarbeitet. Die so erzeugte rote PVC-Folie ist sehr farbstark, migrations- und lichtbeständig.

Beispiel 25: 1000 g Polypropylangranulat DAPLEN® PT-55 der Firma Chemie Linz und 20 g eines 50 %-igen Pigmentpräparates, bestehend aus 10 g der nach Beispiel 2 erhaltenen Pigmentzusammensetzung und 10 g Mg-Behenat, werden in einer Mischtrommel intensiv vermischt. Das so behandelte Granulat wird bei 260 bis 285°C nach dem Schmelzspinnverfahren versponnen. Man erhält rotgefärbte Fasern mit sehr guten Licht- und textilen Echtheiten.

## Patentansprüche

1. Verfahren zur Herstellung und Konditionierung organischer Pigmente, dadurch gekennzeichnet, dass man mindestens einen Tricyclodecan- oder Tricyclodecenalkohol verwendet.

2. Verfahren zur Herstellung organischer Pigmente gemäss Anspruch 1.

3. Verfahren gemäss Anspruch 2, wobei das organische Pigment ein Metallphthalocyanin ist.

4. Verfahren zur Konditionierung organischer Pigmente gemäss Anspruch 1.

5. Verfahren gemäss Anspruch 4, wobei das organische Pigment ein Metallphthalocyanin oder ein Azopigment ist.

6. Verfahren gemäss Anspruch 4, wobei die Konditionierung eine Mahlung in Gegenwart kleiner Mengen mindestens eines Tricyclodecan-oder Tricyclodecenalkohols ist.

7. Verfahren gemäss Anspruch 6, wobei die Menge an Tricyclodecan-oder Tricyclodecenalkohol 0,05 bis 25 Gew.%, bezogen auf das zu mahlende Pigment, beträgt.

8. Verfahren gemäss Anspruch 6, wobei die Mahlung eine Trockenmahlung ist.

9. Verfahren gemäss Anspruch 6, wobei die Mahlung eine wässrige Mahlung ist.

10. Verfahren gemäss Anspruch 4, wobei die Konditionierung eine Rekristallisation ist.

11. Verfahren gemäss Anspruch 1, wobei der Tricyclodecanalkohol die folgende Formel

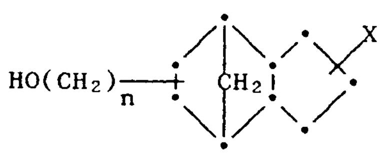

aufweist, wobei n die Zahl 0 oder 1 ist und x ein Wasserstoffatom oder die Gruppe $-CH_2OH$ bedeutet.

12. Verfahren gemäss Anspruch 11, wobei der Tricyclodecanalkohol 3(4),8(9)-Bis(hydroxymethyl)-tricyclo-[5.2.1.0$^{2,6}$]decan, 8(9)-Hydroxy-tricyclo[5.2.1.0$^{2,6}$]decan, 8(9)-Hydroxymethyl-tricyclo[5.2.1.0$^{2,6}$]decan oder 3(4)-Hydroxymethyl-tricyclo[5.2.1.0$^{2,6}$]decan ist.

13. Verfahren gemäss Anspruch 12, worin der Tricyclodecanalkohol 8(9)-Hydroxymethyl-tricyclo[5.2.1.0$^{2,6}$]-decan ist.

**Claims**

1. A process for the preparation and conditioning of an organic pigment, which comprises the use of at least one tricyclodecane alcohol or tricyclodecene alcohol.

2. A process for the preparation of an organic pigment according to claim 1.

3. A process according to claim 2, wherein the organic pigment is a metal phthalocyanine.

4. A process for the conditioning of an organic pigment according to claim 1.

5. A process according to claim 4, wherein the organic pigment is a metal phthalocyanine or an azo pigment.

6. A process according to claim 4, wherein the conditioning takes the form of a grinding procedure in the presence of small amounts of at least one tricyclodecane alcohol or tricyclodecene alcohol.

7. A process according to claim 6, wherein the amount of tricyclodecane alcohol or tricyclodecene alcohol is from 0.05 to 25% by weight, based on the pigment to be ground.

8. A process according to claim 6, wherein the grinding procedure is a dry grinding.

9. A process according to claim 6, wherein the grinding procedure is an aqueous grinding.

10. A process according to claim 4, wherein the conditioning takes the form of a recrystallisation.

11. A process according to claim 1, wherein the tricyclodecane alcohol has the following formula

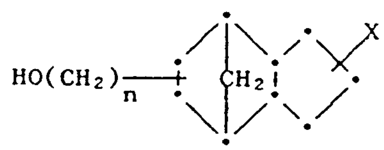

wherein n is 0 or 1 and X is a hydrogen atom or the $-CH_2OH$ group.

12. A process according to claim 11, wherein the tricyclodecane alcohol is 3(4),8(9)-bis(hydroxymethyl)-tricyclo[5.2.1.$0^{2,6}$]decane, 8(9)-hydroxytricyclo[5.2.1.$0^{2,6}$]decane, 8(9)-hydroxymethyltricyclo[5.2.1.$0^{2,6}$]-decane or 3(4)-hydroxymethyltricyclo[5.2.1.$0^{2,6}$]decane.

13. A process according to claim 12, wherein the tricyclodecane alcohol is 8(9)-hydroxymethyltricyclo-[5.2.1.$0^{2,6}$]decane.

**Revendications**

1. Procédé de préparation et de conditionnement de pigments organiques, caractérisé en ce que l'on utilise pour cela un ou plusieurs tricyclodécanols.ou tricyclodécénols.

2. Procédé de préparation de pigments organiques selon la revendication 1.

3. Procédé selon la revendication 2 dans lequel le pigment est une phtalocyanine de métal.

4. Procédé de conditionnement de pigments organiques selon la revendication 1.

5. Procédé selon la revendication 4 dans lequel le pigment est une phtalocyanine de métal ou un pigment azoïque.

6. Procédé selon la revendication 4 dans lequel le conditionnement consiste en un broyage en présence de petites proportions d'un ou plusieurs tricyclodécanols ou tricyclodécénols.

7. Procédé selon la revendication 6 dans lequel la proportion des alcools tricycliques est de 0,05 à 25 % du poids du pigment à broyer.

8. Procédé selon la revendication 6 dans lequel le broyage est un broyage à sec.

9. Procédé selon la revendication 6 dans lequel le broyage est un broyage en milieu aqueux.

10. Procédé selon la revendication 4 dans lequel le conditionnement consiste en une recristallisation.

11. Procédé selon la revendication 1 dans lequel le tricyclodécanol a la formule suivante

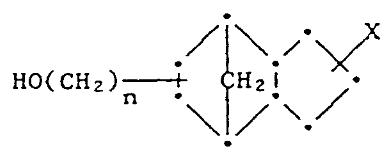

n étant le nombre 0 ou 1 et X représentant un atome d'hydrogène ou le groups $-CH_2OH$.

12. Procédé selon la revendication 11 dans lequel le tricyclodécanol est le 3(4),8(9)-bis(hydroxymethyl)-tricyclo [5.2.1.$0^{2,6}$]décane, le 8(9)-hydroxytricyclo[5.2.1.$0^{2,6}$]décane, le 8(9)-hydroxymethyltricyclo-[5.2.1.$0^{2,6}$]décane ou le 3(4)-hydroxymethyltricyclo[5.2.1.$0^{2,6}$]décane.

13. Procédé selon la revendication 12 dans lequel le trycyclodécanol est le 8(9)-hydroxymethyltricyclo-[5.2.1.$^{2,6}$]décane.